# EUROPEAN PATENT SPECIFICATION

(11) **EP 4 485 562 B1**
(45) Date of publication and mention of the grant of the patent: **25.02.2026**
(21) Application number: 24172366.7
(22) Date of filing: 25.04.2024
(51) Int. Cl.: H01M 4/133, H01M 4/1393

(54) **NEGATIVE ACTIVE MATERIAL, NEGATIVE ELECTRODE PLATE, BATTERY, BATTERY MODULE, AND ELECTRIC DEVICE**
NEGATIVES AKTIVMATERIAL, NEGATIVELEKTRODENPLATTE, BATTERIE, BATTERIEMODUL UND ELEKTRISCHE VORRICHTUNG
MATÉRIAU ACTIF NÉGATIF, PLAQUE D'ÉLECTRODE NÉGATIVE, BATTERIE, MODULE DE BATTERIE ET DISPOSITIF ÉLECTRIQUE

(30) Priority: 29.06.2023 CN 202310785921
(43) Date of publication of application: 01.01.2025
(73) Proprietor: Hithium Tech HK Limited, Hong Kong (HK)
(72) Inventor: FAN, Siqin, Xiamen, Fujian 361100 (CN); LEI, Shun, Xiamen, Fujian 361100 (CN); LIU, Xiaoqing, Xiamen, Fujian 361100 (CN); ZHANG, Qin, Xiamen, Fujian 361100 (CN)
(74) Representative: Manitz Finsterwald Patent- und Rechtsanwaltspartnerschaft mbB

(56) References cited:
- EP-A1- 4 160 728
- US-A1- 2022 085 370
- US-A1- 2023 026 799
- LI ZHIDA ET AL: "Electrochemical Conversion of CO2 into Valuable Carbon Nanotubes: The Insights into Metallic Electrodes Screening", JOURNAL OF THE ELECTROCHEMICAL SOCIETY, vol. 167, 11 February 2020 (2020-02-11), pages 1 - 6, XP093178261, DOI: 10.1149/1945-7111

## Description

### FIELD

The present disclosure relates to the field of batteries, and more particularly, to a negative active material, a negative electrode plate, a battery, a battery module, and an electric device.

### BACKGROUND

A negative active material is a main body for storing lithium in a lithium ion battery and has an important impact on intercalation and deintercalation of lithium ions during a charge and discharge process. Therefore, performance of the negative active material directly affects performance of the lithium batteries. US 2022/085370 A1 discloses a negative electrode active material for a lithium ion secondary battery includes carbonaceous particles having a BET specific surface area of water vapor adsorption of 0.095 m²/g or less calculated from an amount of water vapor adsorption at a relative pressure of from 0.05 to 0.12. US 2023/026799 A1 discloses an anode active material, and an electrochemical device and electronic device using such anode active material. EP 4 160 728 A1 discloses a negative electrode material for a lithium-ion secondary battery capable of providing a high capacity lithium-ion secondary battery, wherein a negative electrode material for a lithium-ion secondary battery containing a composite (C) that contains a porous carbon (A) and a Si-containing compound (B). However, the existing lithium batteries still have low cycle performance and storage performance, which can be further improved.

### SUMMARY

In order to further improve storage performance and cycle performance of a battery, a negative active material, a negative electrode plate, a battery, a battery module, and an electric device are provided in embodiments of the present disclosure. The present invention is set out in the appended claims.

In a first aspect, the embodiments of the present disclosure provide a negative active material. The negative active material comprises a carbon negative material. A particle size distribution A of the negative active material is (D90-D10)/D50; a defect degree B of the negative active material is I_{D}/I_{G}, wherein I_{D} represents an intensity of a peak at 1350 cm⁻¹ in a Raman spectrum of the negative active material and I_{G} represents an intensity of a peak at 1580 cm⁻¹ in a Raman spectrum of the negative active material; and a ratio of the particle size distribution A of the negative active material to the defect degree B of the negative active material is 6.0≤A/B≤7.2.

In the embodiments of the present disclosure, as an optional implementation, the ratio of the particle size distribution A of the negative active material to the defect degree B of the negative active material is 6.17≤A/B≤6.91.

With a gradual increase in the values of the particle size distribution A and the defect degree B of the negative active material, a cycle capacity retention, a storage capacity retention rate, and a storage capacity recovery rate of the battery all exhibit a trend of first increasing and then decreasing. When the ratio of the particle size distribution A of the negative active material to the defect degree B of the negative active material is greater than or equal to 6.17 and smaller than or equal to 6.91, the battery can have optimal cycle capacity retention, storage capacity retention rate, and storage capacity recovery rate. Therefore, the ratio of the particle size distribution A of the negative active material to the defect degree B of the negative active material is preferably 6.17≤A/B≤6.91.

In the embodiments of the present disclosure, as an optional implementation, the particle size distribution A of the negative active material ranges from 0.8 to 2.0.

In this case, fewer fine particles and large particles exist in the negative active material, and the particle size distribution of the negative active material is relatively moderate, indicating that fewer defects exist on a surface of the negative active material. In the meantime, the defect degree B is also reduced, accordingly. Therefore, side reactions within the battery can be effectively reduced, and storage performance of the battery can be improved.

When the above-mentioned particle size distribution A is excessively great, it indicates that the particle size distribution of the negative active material is wider. In this case, excessive fine particles and large particles exist in the negative active material. The excessive fine particles may result in many defects on the surface of the negative active material. Accordingly, the value of the defect degree B increases, and the side reactions within the battery increase, leading to a decrease in the storage performance of the battery. The excessive large particles may lead to that the negative active material has a greater expansion rate during battery cycle process, resulting in a higher safety risk of the battery during use. In addition, a transmission path of lithium ions is excessively long, leading to a further deterioration of the cycle performance of the battery.

When the particle size distribution A is excessively small, it indicates that the particle size distribution of the negative active material is excessively concentrated, such that the tolerable compaction of the negative active material is lower. Thus, overpressure is more likely to occur, resulting in a decrease in the cycle performance.

In the embodiment of the present disclosure, as an optional implementation, the defect degree B of the above-mentioned negative active material ranges from 0.1 to 0.35.

When the defect degree B ranges from 0.1 to 0.35, the side reactions within a battery cell can be effectively reduced, and the storage performance of the battery cell can be improved. In the meantime, the battery has a better dynamic performance and lithium precipitation is less likely to occur. When the defective degree B of the negative active material is excessively small, the dynamic performance of the battery deteriorates, and lithium precipitation is more likely to occur. When the defective degree B is excessively great, the side reactions within the battery increase, and the storage performance of the battery decreases.

The most preferred solution is to simultaneously control the ratio of the particle size distribution A of the negative active material to the defect degree B of the negative active material to be 6.0≤A/B≤7.2, the particle size distribution A to range from 0.8 to 2.0, and the defect degree B to range from 0.1 to 0.35. By simultaneously controlling the ratio of the particle size distribution A of the negative active material to the defect degree B of the negative active material, the particle size distribution A, and the defect degree B to be within the above-mentioned ranges, these parameters cooperate with each other, enabling the battery to have better storage performance and cycle performance at the same time.

In the embodiments of the present disclosure, as an optional implementation, D90 of the negative active material ranges from 21.0 µm to 32.0 µm; D10 of the negative active material ranges from 4.0 µm to 8.5 µm; and D50 of the negative active material ranges from 12.0 µm to 18.0 µm.

When D50 of the negative active material is excessively small, the negative active material has a relatively large specific surface area, and more side reactions are likely to occur in a battery storage process, resulting in a decrease in the storage performance. When D50 is excessively great, paths for intercalation and deintercalation of the lithium ions become longer. As a result, lithium precipitation is more likely to occur during battery cycle process, resulting in deterioration of the cycle performance.

In a second aspect, the present disclosure provides a negative electrode plate. The negative electrode plate includes a current collector and a negative active layer laminated on the collector. The negative active layer includes the above-mentioned negative active material according to the first aspect.

In a third aspect, the present disclosure provides a battery. The battery includes an electrolyte, a positive electrode plate, a separator disposed at a side of the positive electrode plate, and the negative electrode plate according to the second aspect disposed at a side of the separator facing away from the positive electrode plate. At least part of the positive electrode plate, at least part of the separator, and at least part of the negative electrode plate are immersed in the electrolyte.

In a fourth aspect, the present disclosure provides a battery module. The battery module includes the battery according to the third aspect.

In a fifth aspect, the embodiments of the present disclosure provide an electric device. The electric device includes the battery module according to the fourth aspect.

Compared with the related art, the present disclosure has the following beneficial effects.

The Applicant has found through extensive research that, by controlling the ratio of the particle size distribution A of the negative active material and the defect degree B of the negative active material to be 6.0≤A/B≤7.2, the cycle performance and storage performance of the battery can be significantly improved. Therefore, excellent cycle performance and storage performance can be obtained by controlling the ratio of the particle size distribution A to the defective degree B, without simultaneously adjusting other parameters of the negative active material such as specific surface area, porosity, or pore volume. When the value of A/B is less than 6.0, it indicates that the particle size distribution of the negative active material is excessively concentrated or excessive surface defects exist. When the particle size distribution of the negative active material is excessively concentrated, the tolerable compaction of the negative active material is lower. Thus, overpressure is more likely to occur, resulting in a decrease in the cycle performance. The excessive surface defects in the negative active material may lead to an increase in the side reactions within the battery, thereby reducing the storage performance. When the value of A/B is greater than 7.2, it indicates that the particle size distribution of the negative active material is excessively great or the surface defects are insufficient. As a result, lithium precipitation may occur during battery cycle process, resulting in a decrease in the cycle performance.

### DETAILED DESCRIPTION

Technical solutions in the embodiments of the present disclosure are clearly and thoroughly described below. The embodiments described herein are merely a part of the embodiments of the present disclosure, rather than all embodiments of the present disclosure.

The increase in surface defects of a negative active material is conducive to the improvement of dynamic performance of a battery, thereby improving cycle performance. However, the increase in surface defects of the negative active material can also increase side reactions during storage process of the battery at the same time, thereby reducing the storage capacity retention rate and storage capacity recovery rate. Therefore, when the battery has good cycle performance, the storage performance is relatively poor, and it is difficult to improve both at the same time.

According to the present disclosure, by controlling a ratio of a particle size distribution A of the negative active material to a defect degree B of the negative active material within a specific range, the storage performance and cycle performance of the battery can be well balanced. Thus, the storage performance and the cycle performance of the battery can be significantly improved at the same time. In addition, previous limitations caused by low storage performance and cycle performance can be overcome at the same time. The cycle capacity retention rate of the battery can be increased to more than 94%, and the storage capacity retention rate and storage capacity recovery rate of the battery can be simultaneously increased to more than 95%, which have great significance for research and development of batteries.

The technical solutions of the present disclosure will be further described below with reference to the embodiments.

**In a** first aspect, the embodiments of the present disclosure provide a negative active material. A particle size distribution A of the negative active material is (D90-D10)/D50, a defect degree B of the negative active material is I_{D}/I_{G}, and a ratio of the particle size distribution A of the negative active material is to the defect degree B of the negative active material is 6.0≤A/B≤7.2.

It should be noted that D10, D50, and D90 are all parameters of particle size of powder particles. D10 represents a particle size when cumulative particle size distribution percentage of the particles reaches 10%, that is, content of the particles having a particle size smaller than such a particle size accounts for 10% by volume of all particles.

D50 represents a particle size when the cumulative particle size distribution percentage of the particles reaches 50%, and is also referred as to a median particle size, i.e., the content of the particles having a particle size smaller than such a particle size accounts for 50% by volume of all particles. This is a typical value indicating the particle size, which accurately divides the total particles into two equal parts. That is, 50% of the particles have a particle size exceeding such a value and 50% of the particles have a particle size below such a value.

D90 represents a particle size when the cumulative particle size distribution percentage of the particles reaches 90%, that is, the content of the particles having a particle size smaller than such a particle size accounts for 90% by volume of all particles.

A ratio of (D90-D10)/D50 can reflect a degree of concentration of particles. A greater value of (D90-D10)/D50 indicates a lower degree of concentration of the particles and a wider size distribution of the particles. A smaller (D90-D10)/D50 value of indicates a higher degree of concentration of the particles and a narrower size distribution of the particles.

I_{D} represents a peak intensity located at 1350 cm⁻¹ in a Raman test, and I_{G} represents a peak intensity located at 1580 cm⁻¹. A greater value of I_{D}/I_{G} indicates a higher defect degree of the particles, and a smaller value of I_{D}/I_{G} indicates a lower defect degree of the particles.

The Applicant has found through extensive research that, by controlling the ratio of the particle size distribution A of the negative active material and the defect degree B of the negative active material to be 6.0≤A/B≤7.2, the cycle performance and storage performance of the battery can be significantly improved. Therefore, it is pivotal to obtain excellent cycle performance and storage performance by controlling the ratio of the particle size distribution A to the defective degree B. Other parameters of the negative active material, such as oil absorption value, porosity, or pore volume, have insignificant influence on the cycle performance and storage performance of the battery. When the value of A/B is less than 6.0, it indicates that the particle size distribution of the negative active material is excessively concentrated or excessive surface defects exist. When the particle size distribution of the negative active material is excessively concentrated, the tolerable compaction of the negative active material is lower. Thus, overpressure is more likely to occur, resulting in a decrease in the cycle performance. The excessive surface defects in the negative active material may lead to an increase in the side reactions within the battery, thereby reducing the storage performance. When the value of A/B is greater than 7.2, it indicates that the particle size distribution of the negative active material is excessively great or the surface defects are insufficient. As a result, lithium precipitation may occur during battery cycle process, resulting in a decrease in the cycle performance.

For example, the ratio of the particle size distribution A to the defect degree B may be 6.0, 6.1, 6.2, 6.3, 6.4, 6.5, 6.6, 6.7, 6.8, 6.9, 7.0, 7.1, 7.2, etc.

With a gradual increase in the values of the particle size distribution A and the defect degree B of the negative active material, a cycle capacity retention, a storage capacity retention rate, and a storage capacity recovery rate of the battery all exhibit a trend of first increasing and then decreasing. When the ratio of the particle size distribution A of the negative active material to the defect degree B of the negative active material is greater than or equal to 6.17 and smaller than or equal to 6.91, the battery can have optimal cycle capacity retention, storage capacity retention rate, and storage capacity recovery rate. Therefore, the ratio of the particle size distribution A of the negative active material to the defect degree B of the negative active material is preferably 6.17≤A/B≤6.91.

Further, the value of the above-mentioned particle size distribution A of the negative active material ranges from 0.8 to 2.0. In this case, fewer fine particles and large particles exist in the negative active material, and the particle size distribution of the negative active material is relatively moderate, indicating that fewer defects exist on a surface of the negative active material. In the meantime, the defect degree B is also reduced, accordingly. Therefore, side reactions within the battery can be effectively reduced, and storage performance of the battery can be improved.

When the above-mentioned particle size distribution A is excessively great, it indicates that the particle size distribution of the negative active material is wider. In this case, excessive fine particles and large particles exist in the negative active material. The excessive fine particles may result in many defects on the surface of the negative active material. Accordingly, the value of the defect degree B increases, and the side reactions within the battery increase, leading to a decrease in the storage performance of the battery. The excessive large particles may lead to that the negative active material has a greater expansion rate during battery cycle process, resulting in a higher safety risk of the battery during use. In addition, a transmission path of lithium ions is excessively long, leading to a further deterioration of the cycle performance of the battery.

When the particle size distribution A is excessively small, it indicates that the particle size distribution of the negative active material is excessively concentrated, such that the tolerable compaction of the negative active material is lower. Thus, overpressure is more likely to occur, resulting in a decrease in the cycle performance.

For example, the value of the particle size distribution A may be 0.8, 1.0, 1.2, 1.4, 1.6, 1.8, 2.0, etc.

Further, the above-mentioned defect degree B of the negative electrode active material ranges from 0.1 to 0.35. When the defect degree B ranges from 0.1 to 0.35, the side reactions within a battery cell can be effectively reduced, and the storage performance of the battery cell can be improved. In the meantime, the battery has a better dynamic performance and lithium precipitation is less likely to occur. When the defective degree B of the negative active material is excessively small, the dynamic performance of the battery deteriorates, and lithium precipitation is more likely to occur. When the defective degree B is excessively great, the side reactions within the battery increase, and the storage performance of the battery decreases.

For example, the defect degree B may be 0.1, 0.15, 0.2, 0.25, 0.3, 0.35, etc.

Furthermore, in some embodiments, the most preferred solution is to simultaneously control the ratio of the particle size distribution A of the negative active material to the defect degree B of the negative active material to be 6.0≤A/B≤7.2, the particle size distribution A to range from 0.8 to 2.0, and the defect degree B to range from 0.1 to 0.35. By simultaneously controlling the ratio of the particle size distribution A of the negative active material to the defect degree B of the negative active material, the particle size distribution A, and the defect degree B to be within the above-mentioned ranges, these parameters cooperate with each other, enabling the battery to have better storage performance and cycle performance at the same time.

In some embodiments, D90 of the negative active material ranges from 21.0 µm to 32.0 µm, D10 of the negative active material ranges from 4.0 µm to 8.5 µm, and D50 of the negative active material ranges from 12.0 µm to 18.0 µm.

When D50 of the negative active material is excessively small, the negative active material has a relatively large specific surface area, and more side reactions are likely to occur in a battery storage process, resulting in a decrease in the storage performance. When D50 is excessively great, paths for intercalation and deintercalation of the lithium ions become longer. As a result, lithium precipitation is more likely to occur during battery cycle process, resulting in deterioration of the cycle performance.

In some embodiments, the above-mentioned negative electrode active material includes one or more of carbon negative material, tin-based negative material, lithium-containing transition metal nitride negative material, alloy negative material, and nanoscale negative material.

The solutions of the present disclosure are universally applicable to any negative active materials, including, but not limited to, for example, carbon negative material, tin-based negative material, lithium-containing transition metal nitride negative material, alloy negative material, and nanoscale negative material. The solutions of the present disclosure are also applicable to a mixed material of two or more above-mentioned negative materials. This aspect is not specifically limited in the embodiments of the present disclosure.

In a second aspect, the present disclosure provides a negative electrode plate. The negative electrode plate includes a current collector, and a negative active layer laminated on the current collector. The negative active layer includes the negative active material according to the first aspect.

In a third aspect, the present disclosure provides a battery. The battery includes an electrolyte, a positive electrode plate, a separator disposed at a side of the positive electrode plate, and the negative electrode plate according to the second aspect disposed at a side of the separator facing away from the positive electrode plate. At least part of the positive electrode plate, at least part of the separator, and at least part of the negative electrode plate are immersed in the electrolyte.

In a fourth aspect, the present disclosure provides a battery module. The battery module includes the battery according to the third aspect.

In a fifth aspect, the embodiments of the present disclosure provide an electric device. The electric device includes the battery module according to the fourth aspect.

The technical solutions of the present disclosure will be further described below with reference to specific examples.

### Example 1

Example 1 provided a lithium ion battery. The lithium ion battery included a positive electrode plate, a negative electrode plate, an electrolyte, and a separator. The separator was disposed between the positive electrode plate and the negative electrode plate. The negative electrode plate included an aluminum foil and a negative active layer on a surface of the aluminum foil. A negative active material of the negative active layer was graphite, having D90 of 21.5 µm, D10 of 7.6 µm, and D50 of 17.0 µm, a particle size distribution A was 0.82, a defective degree B of 0.12. A ratio of the particle size distribution A to the defective degree B was 6.91.

Example 1 further provided a preparation method of the above-mentioned lithium-ion battery, including the following steps.

### Preparation of the negative electrode plate:

The above-mentioned graphite, conductive carbon black, styrene-butadiene rubber (SBR), and sodium carboxymethyl cellulose (CMC) were mixed evenly, according to a mass ratio of 96%: 1%: 2%: 1%, in an appropriate amount of water to prepare a negative electrode slurry. The negative electrode slurry was coated on a surface of an aluminum foil and dried to obtain an unrolled negative electrode plate. Then, the electrode plate was rolled by a roller press according to a designed compacted density to obtain a negative electrode plate with a certain thickness.

### Preparation of the lithium ion battery:

Lithium iron phosphate, conductive carbon black, and polyvinylidene fluoride (PVDF) were mixed evenly, according to a mass ratio of 96%: 2%: 2%, in an appropriate amount of N-methylpyrrolidone to prepare a positive electrode slurry. The positive electrode slurry was coated on a surface of a copper foil. Then, the slurry was coated on an aluminum foil of the positive current collector, dried, and cold pressed to obtain a positive electrode plate.

The above-mentioned negative electrode plate and positive electrode plate were respectively put into a press machine for pressing. Then, the positive electrode plate and the negative electrode plate were cut into a certain size using a cutter, respectively. The cut positive electrode plate and negative electrode plate, together with a polyethylene separator, were coiled. Then positive tabs and negative tabs were welded, dried, and then encapsulated using an aluminum plastic film to form a battery cell. 1 mol/L of lithium hexafluorophosphate was dissolved in a mixed solvent of ethylene carbonate and diethyl carbonate in a molar ratio of 1: 1. The obtained solution, as electrolyte, was injected into the battery cell, and finally encapsulated to form a lithium ion battery.

### Example 2

Example 2 provided a lithium ion battery. Example 2 differed from Example 1 in that: graphite had D90 of 23.5 µm, D10 of 5.7 µm, D50 of 15.8 µm, a particle size distribution A of 1.13, and a defect degree B of 0.16, and the ratio of the particle size distribution A to the defect degree B was 7.06.

### Example 3

Example 3 provided a lithium ion battery. Example 3 differed from Example 1 in that: graphite had D90 of 24.4 µm, D10 of 6.2 µm, D50 of 14.2 µm, a particle size distribution A of 1.28, and a defect degree B was 0.19, and the ratio of the particle size distribution A to the defect degree B was 6.73.

### Example 4

Example 4 provided a lithium ion battery. Example 4 differed from Example 1 in that: graphite had D90 of 28.3 µm, D10 of 6.5 µm, D50 of 15.4 µm, a particle size distribution A of 1.42, and a defect degree B of 0.23, and the ratio of the particle size distribution A to the defect degree B was 6.17.

### Example 5

Example 5 provided a lithium ion battery. Example 5 differed from Example 1 in that: graphite had D90 of 26.8 µm, D10 of 7.1 µm, D50 of 16.3 µm, a particle size distribution A of 1.21, and a defect degree B of 0.26, and the ratio of the particle size distribution A to the defect degree B was 6.19.

### Example 6

Example 6 provided a lithium ion battery. Example 6 differed from Example 1 in that: graphite had D90 of 31.2 µm, D10 of 4.5 µm, D50 of 13.2 µm, a particle size distribution A of 2.019, and a defect degree B of 0.3, and the ratio of the particle size distribution A to the defect degree B was 6.73.

### Example 7

Example 7 provided a lithium ion battery. Example 7 differed from Example 1 in that: graphite had D90 of 30.6 µm, D10 of 4.9 µm, D50 of 12.9 µm, a particle size distribution A of 2, and a defect degree B of 0.3, and the ratio of the particle size distribution A to the defect degree B was 6.0.

### Example 8

Example 8 provided a lithium ion battery. Example 8 differed from Example 1 in that: graphite had D90 of 23.1 µm, D10 of 6.8 µm, D50 of 16.3 µm, a particle size distribution A of 1, and a defect degree B of 0.139, and the ratio of the particle size distribution A to the defect degree B was 7.19.

### Comparative Example 1

Comparative Example 1 provided a lithium ion battery. Comparative Example 1 differed from Example 1 in that: graphite had D90 of 29.3 µm, D10 of 4.6 µm, D50 of 13.4 µm, a particle size distribution A of 1.85, and a defect degree B of 0.32, and the ratio of the particle size distribution A to the defect degree B was 5.78.

### Comparative Example 2

Comparative Example 2 provided a lithium ion battery. Comparative Example 2 differed from Example 1 in that: graphite had D90 of 30.5 µm, D10 of 4.2 µm, D50 of 12.5 µm, a particle size distribution A of 2.1, and a defect degree B of 0.29, and the ratio of the particle size distribution A to the defect degree B was 7.25.

### Experiment 1

### Particle size distribution test

The lithium ion battery was discharged to 0% SOC (or 2.5V). The negative electrode plate was disassembled (x/32cm, x is a total length of the negative electrode plate). A 3 cm*3 cm negative electrode plate was taken and immersed in DMC solution for 3 hours. After drying in an oven for 1 hour, the negative electrode plate was immersed in deionized water to peel off the negative active material of the negative electrode plate from the copper foil. The obtained aqueous solution of the negative active material of the negative electrode plate was ultrasonicated for 15 to 30 minutes, followed by suction filter, and the filter cake was put into the oven to dry for 1 hour to obtain a block of negative active material. After grinding the block negative active material, the particle size distribution of the negative active material was measured using a laser diffraction particle size distribution measuring instrument (Malvern Mastersizer3000) according to "Particle Size Distribution Laser Diffraction Method" specified in GB/T 19077-2016. D10, D50, and D90 of the negative active material were recorded and the particle size distribution A was calculated as D90-D10/D50.

### Experiment 2

### Raman spectroscopy test

A Laser Raman Micro-spectrometer (LabRAM HR Evolution) was used. An intensity of a peak at 1350 cm⁻¹ in the Raman spectrum was recorded as I_{D}, an intensity of a peak at 1580 cm⁻¹ in the Raman spectrum was recorded as I_{G}, and the defect degree B was calculated as ID/IG.

### Experiment 3

### Capacity retention rate test

At room temperature (25°C), the lithium ion batteries prepared in the above-mentioned comparative examples and examples were charged to 3.65V at a constant power rate of 0.5P (P represents power, P = nominal capacity × 3.2V), stood for 5 minutes, and then discharged to 2.5V at a rate of 0.5P to measure discharge capacity. The above was taken as one cycle. The capacity retention rate (%) was calculated according to the following formula: capacity retention rate (%) = current discharge capacity/initial discharge capacity.

It can be understood that a process of one charging and discharging of the battery is regarded as one cycle. The capacity retention rate after 2000 cycles refers to the capacity retention rate of the battery after 2000 times of charging and discharging process at a test temperature of 25°C.

### Experiment 4

### Storage performance test

At room temperature (25°C), the lithium ion batteries prepared in the above-mentioned comparative examples and examples were charged to 3.65V at a constant power rate of 0.5P (P represents power, P = nominal capacity × 3.2V), stood for 5 minutes, and then discharged to 2.5V at a rate of 0.5P to measure the discharge capacity. Three cycles were performed and the average of three discharged capacities was recorded as a pre-storage capacity (C1). After storing at 25°C for 28 days, the lithium ion battery was continued to stand for 6 hours, and then discharged to 2.5V at a rate of 0.5P. The discharge capacity was measured and recorded as a post-storage capacity (C2). Then, the lithium ion battery was charged to 3.65V at a constant power of 0.5P rate, stood for 5 minutes, and finally discharged to 2.5V at a 0.5P rate. The discharge capacity was measured and recorded as a post-storage recovery capacity (C3).

Post-storage capacity retention rate (%) = post-storage capacity (C2)/pre-storage capacity (C1). Post-storage capacity recovery rate (%) = post-storage recovery capacity (C3)/pre-storage capacity (C1).

The test results of the above Experiment 1 to Experiment 4 and the results of the ratio of the particle size distribution A to the defect degree B are listed in Table 1.

**[Table 1]**

| | Particle size distribution A | Defect degree B | A/B | Cycle capacity retention rate (2000 cycles) | Storage capacity retention rate | Storage capacity recovery rate |
|---|---|---|---|---|---|---|
| Example 1 | 0.82 | 0.12 | 6.91 | 97.60% | 96.50% | 97.70% |
| Example 2 | 1.13 | 0.16 | 7.06 | 96.70% | 96.30% | 97.10% |
| Example 3 | 1.28 | 0.19 | 6.73 | 98.50% | 97.60% | 98.80% |
| Example 4 | 1.42 | 0.23 | 6.17 | 97.20% | 96.10% | 97.30% |
| Example 5 | 1.21 | 0.26 | 6.19 | 95.80% | 95.50% | 96.80% |
| Example 6 | 2.019 | 0.3 | 6.73 | 94.70% | 95.10% | 95.70% |
| Example 7 | 2 | 0.3 | 6.0 | 94.90% | 95.60% | 96.40% |
| Example 8 | 1 | 0.139 | 7.19 | 96.20% | 95.70% | 96.80% |
| Comparative Example 1 | 1.85 | 0.32 | 5.78 | 93.60% | 94.10% | 94.40% |
| Comparative Example 2 | 2.1 | 0.29 | 7.25 | 92.20% | 91.50% | 91.60% |

The data in Table 1 suggest that, with the values of A/B in Example 1 to Example 8 in the range of 6.0 and 7.2, the cycle capacity retention rates in Example 1 to Example 8 were increased to more than 94%, while the storage capacity retention rate and storage capacity recovery rate were increased to more than 95%. The problem in the related that the cycle performance and the storage performance can hardly be further improved can be solved. In addition, the cycle performance and the storage performance in the solutions of the above-mentioned examples are both improved, which is of great significance for promoting research and development of the battery. Therefore, controlling the A/B of the negative active material is of great significance for further improving the cycle performance and storage performance of the battery.

Compared with Example 1 to Example 8, the value of A/B in Comparative Example 1 was 5.78, and the value of A/B in Comparative Example 2 was 7.3. It can be seen that the cycle capacity retention rate, storage capacity retention rate, and storage capacity recovery rate of the batteries in Examples 1 to 8 were significantly improved, compared with those of Comparative Example 1 and Comparative Example 2. It indicates that, with an increase in the value of A/B, the cycle capacity retention rate, storage capacity retention rate, and storage capacity recovery rate of the battery exhibit a trend of increasing first and then decreasing, and different values of A/B lead to significant differences in the cycle capacity retention rate, storage capacity retention rate, and storage capacity recovery rate of the battery. The preferred range of A/B is from 6.0 to 7.2, which can significantly improve the cycle performance and storage performance of the battery. When the value of A/B goes beyond the range of 6.0 to 7.2, the cycle capacity retention rate, storage capacity retention rate, and storage capacity recovery rate of the battery all decrease.

Based on the comparison of the data of Example 3 and Example 6, it suggests that in Example 6, the value of the particle size distribution A was 2.019, going beyond the range of 0.8 to 2.0; the value of the defect degree B was 0.3, which is within a range of 0.1 to 0.35; and the cycle capacity retention rate, storage capacity retention rate, and storage capacity recovery rate of the battery all decreased to a certain extent. It substantiates that the value of the particle size distribution A or the defect degree B also affects the cycle capacity retention rate, storage capacity retention rate, and storage capacity recovery rate of the battery to a certain extent. By simultaneously controlling A/B, the particle size distribution A, and the defect degree B, the cycle capacity retention rate, storage capacity retention rate, and storage capacity recovery rate of the battery can be advantageously.

The negative active material, the negative electrode plate, the battery, the battery module, and the electric device disclosed in the embodiments of the present disclosure have been introduced in detail above. Specific examples are used herein to illustrate the principles and embodiments of the present disclosure. The description of the above embodiments are only used to help understand the negative active material, the negative electrode plate, the battery, the battery module, and the electric device of the present disclosure and the core concepts thereof. At the same time, those of ordinary skill in the art, based on the concept of the present disclosure, can make changes to the specific .
The invention is defined by the appended claims.

## Claims

1. A negative active material, wherein:
the negative active material comprises a carbon negative material;
a particle size distribution A of the negative active material is (D90-D10)/D50;
a defect degree B of the negative active material is I_{D}/I_{G}, I_{D} representing an intensity of a peak at 1350 cm⁻¹ in a Raman spectrum of the negative active material, and I_{G} representing an intensity of a peak at 1580 cm⁻¹ in a Raman spectrum of the negative active material; and
a ratio of the particle size distribution A of the negative active material to the defect degree B of the negative active material is 6.0≤A/B≤7.2.

2. The negative active material according to claim 1, wherein the ratio of the particle size distribution A of the negative active material to the defect degree B of the negative active material is 6.17≤A/B≤6.91.

3. The negative active material according to claim 1, wherein the particle size distribution A ranges from 0.8 to 2.0.

4. The negative active material according to any one of claims 1 to 3, wherein the defect degree B ranges from 0.1 to 0.35.

5. The negative active material according to claim 1, wherein:
D90 of the negative active material ranges from 21.0 µm to 32.0 µm;
D10 of the negative active material ranges from 4.0 µm to 8.5 µm; and
D50 of the negative active material ranges from 12.0 µm to 18.0 µm.

6. A negative electrode plate, comprising:
a current collector; and
a negative active layer laminated on the current collector, the negative active layer comprising the negative active material according to any one of claims 1 to 5.

7. A battery, comprising:
an electrolyte;
a positive electrode plate, at least part of the positive electrode plate being immersed in the electrolyte;
a separator disposed at a side of the positive electrode plate, at least part of the separator being immersed in the electrolyte; and
the negative electrode plate according to claim 6, the negative electrode plate being disposed at a side of the separator facing away from the positive electrode plate, at least part of the negative electrode plate being immersed in the electrolyte.

8. A battery module, comprising the battery according to claim 7.

9. An electric device, comprising the battery module according to claim 8.

## Patentansprüche

1. Negatives aktives Material, wobei:
das negative aktive Material ein negatives Kohlenstoffmaterial umfasst;
eine Teilchengrößenverteilung A des negativen aktiven Materials (D90-D10)/D50 beträgt;
ein Defektgrad B des negativen aktiven Materials I_{D}/I_{G} ist, wobei I_{D} eine Intensität eines Peaks bei 1350 cm⁻¹ in einem Ramanspektrum des negativen aktiven Materials repräsentiert und I_{G} eine Intensität eines Peaks bei 1580 cm⁻¹ in einem Ramanspektrum des negativen aktiven Materials repräsentiert; und
ein Verhältnis der Teilchengrößenverteilung A des negativen aktiven Materials zum Defektgrad B des negativen aktiven Materials 6,0 ≤ A/B ≤ 7,2 beträgt.

2. Negatives aktives Material nach Anspruch 1, wobei das Verhältnis der Teilchengrößenverteilung A des negativen aktiven Materials zum Defektgrad B des negativen aktiven Materials 6,17 ≤ A/B ≤ 6,91 beträgt.

3. Negatives aktives Material nach Anspruch 1, wobei die Teilchengrößenverteilung A im Bereich von 0,8 bis 2,0 liegt.

4. Negatives aktives Material nach einem der Ansprüche 1 bis 3, wobei der Defektgrad B im Bereich von 0,1 bis 0,35 liegt.

5. Negatives aktives Material nach Anspruch 1, wobei:
D90 des negativen aktiven Materials im Bereich von 21,0 µm bis 32,0 µm liegt;
D10 des negativen aktiven Materials im Bereich von 4,0 µm bis 8,5 µm liegt; und
D50 des negativen aktiven Materials im Bereich von 12,0 µm bis 18,0 µm liegt.

6. Negative Elektrodenplatte, umfassend:
ein Stromsammler; und
eine negative aktive Schicht, die auf den Stromsammler laminiert ist, wobei die negative aktive Schicht das negative aktive Material gemäß einem der Ansprüche 1 bis 5 umfasst.

7. Batterie, umfassend:
ein Elektrolyt
eine positive Elektrodenplatte, wobei mindestens ein Teil der positiven Elektrodenplatte in den Elektrolyt eingetaucht ist;
ein Separator, der an einer Seite der positiven Elektrodenplatte angeordnet ist, wobei mindestens ein Teil des Separators in den Elektrolyt eingetaucht ist; und
die negative Elektrodenplatte nach Anspruch 6, wobei die negative Elektrodenplatte an einer Seite des Separators angeordnet ist, die von der positiven Elektrodenplatte abgewandt ist, und wobei mindestens ein Teil der negativen Elektrodenplatte in den Elektrolyt eingetaucht ist.

8. Batteriemodul, umfassend die Batterie nach Anspruch 7.

9. Elektrische Vorrichtung, umfassend das Batteriemodul nach Anspruch 8.

## Revendications

1. Un matériau actif négatif, **caractérisé en ce que** :
ledit matériau actif négatif comprend un matériau négatif carboné ;
sa distribution granulométrique A est définie par la formule (D90-D10)/D50 ;
son degré de défaut B est égal à I_{D}/I_{G}, où I_{D} représente l'intensité du pic situé à 1 350 cm⁻¹ dans le spectre Raman de ledit matériau actif négatif, et I_{G} représente l'intensité du pic situé à 1 580 cm⁻¹ dans le même spectre Raman ; et
le rapport entre sa distribution granulométrique A et son degré de défaut B vérifie la relation suivante : 6,0 ≤ A/B ≤ 7,2.

2. Matériau actif négatif selon la revendication 1, **caractérisé en ce que** le rapport entre sa distribution granulométrique A et son degré de défaut B vérifie la relation : 6,17 ≤ A/B ≤ 6,91.

3. Matériau actif négatif selon la revendication 1, **caractérisé en ce que** sa distribution granulométrique A est comprise entre 0,8 et 2,0.

4. Matériau actif négatif selon l'une quelconque des revendications 1 à 3, **caractérisé en ce que** son degré de défaut B est compris entre 0,1 et 0,35.

5. Matériau actif négatif selon la revendication 1, **caractérisé en ce que** :
son paramètre D90 est compris entre 21,0 µm et 32,0 µm ;
son paramètre D10 est compris entre 4,0 µm et 8,5 µm ; et
son paramètre D50 est compris entre 12,0 µm et 18,0 µm.

6. Une plaque d'électrode négative, comprenant :
un collecteur de courant ; et
une couche active négative stratifiée sur ledit collecteur de courant, ladite couche active négative comprenant le matériau actif négatif selon l'une quelconque des revendications 1 à 5.

7. Une batterie, comprenant :
un électrolyte ;
une plaque d'électrode positive, et au moins une partie de la plaque d'électrode positive est immergée dans ledit électrolyte ;
un séparateur disposé sur un côté de ladite plaque d'électrode positive, dont au moins une partie est immergée dans ledit électrolyte ; et
la plaque d'électrode négative selon la revendication 6, ladite plaque d'électrode négative étant disposée sur le côté du séparateur opposé à ladite plaque d'électrode positive, dont au moins une partie est immergée dans ledit électrolyte.

8. Un module de batterie, comprenant la batterie selon la revendication 7.

9. Un dispositif électrique, comprenant le module de batterie selon la revendication 8.
